# FASCICULE DE BREVET EUROPEEN

(11) **EP 1 955 248 B1**
(45) Date de publication et mention de la délivrance du brevet: **07.01.2015**
(21) Numéro de dépôt: 06830247.0
(22) Date de dépôt: 30.11.2006
(51) Int. Cl.: H04N 21/418, H04N 21/4367, H04N 21/443, G06F 21/77, H04N 7/16, G06F 21/12, G06F 21/34

(54) **MODULE DE SÉCURITÉ ÉVOLUTIF**
LERNFÄHIGES SICHERHEITSMODUL
ADAPTABLE SECURITY MODULE

(30) Priorité: 30.11.2005 EP 05111532
(43) Date de publication de la demande: 13.08.2008
(73) Titulaire: Nagravision S.A., 1033 Cheseaux-sur-Lausanne (CH)
(72) Inventeur: HILL, Michael John, CH-1296 Coppet (CH)
(74) Mandataire: Leman Consulting S.A.
(86) Numéro de dépôt international: PCT/EP2006/069150
(87) Numéro de publication internationale: WO 2007/063108

(56) Documents cités:
- EP-A- 1 486 907
- EP-A1- 1 496 470
- US-A1- 2004 190 558
- US-A1- 2004 263 319
- US-B1- 6 168 083

## Description

### Domaine de l'invention

La présente invention concerne le domaine des modules de sécurités électroniques, en particulier les modules de sécurité destinés au contrôle d'accès à des prestations télédiffusées et autres médias.

### Etat de la technique

Les opérations de sécurité sont généralement effectuées dans un module de sécurité associé à l'unité multimédia ou au décodeur. Un tel module de sécurité peut être réalisé en particulier selon quatre formes distinctes. L'une d'elles est une carte à microprocesseur sécurisé généralement de forme ISO 7816, une carte à puce, ou plus généralement un module électronique (ayant une forme de clé, de badge,...). Un tel module est généralement amovible et connectable au décodeur. La forme avec contacts électriques est la plus utilisée, mais n'exclut pas une liaison sans contact par exemple de type ISO 14443 ou une combinaison de type avec et sans contact.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans la pratique, l'évolution de ces modules de sécurité est grande entre les premiers modules utilisés dans un parc de décodeurs et ceux installés avec les derniers décodeurs. Plusieurs générations de modules de sécurité peuvent cohabiter dans un même parc d'un opérateur de distribution de média par exemple par satellite, par câble pour via Internet.

Il va sans dire que si des failles de sécurité sont détectées, le remplacement d'anciens modules est alors effectué.

La différence de génération de modules est souvent reliée aux services qu'accepte l'unité d'utilisateur qui y est attachée. En effet, si une version de module ne contient pas la fonction "porte-monnaie", il lui sera impossible de charger un crédit et donc d'autoriser la consommation de contenu sans échange bi-directionnel avec un centre de gestion.

Ainsi, un module d'une certaine génération offrira un nombre de services limité.

Ceci est aussi une contrainte pour les unités d'utilisateurs, à savoir la compatibilité avec toutes les générations de module. Le procédé utilisé à ce jour est l'identification du module de sécurité par l'unité d'utilisateur. Cette identification peut d'ailleurs être bi-directionnelle c'est-à-dire que le module de sécurité interroge l'unité d'utilisateur afin de savoir quelles sont ses caractéristiques.

Le changement de génération de module de sécurité peut s'accompagner par des modifications matérielles par exemple par la disponibilité de nouveaux ports de communication. Un exemple d'un tel module de sécurité est illustré dans le brevet US 6'779'734.

Il est donc important qu'un module de sécurité puisse s'adapter aux unités d'utilisateur et ajuster ses fonctionnalités suivant les moyens de communication de l'unité d'utilisateur.

Un tiers malveillant pourrait utiliser un décodeur modifié et tenter d'accéder aux services à haute-valeur ajoutée en se faisant passer pour un décodeur de la dernière génération. Une fois dans ce mode, il va tenter de modifier la mémoire interne du module de sécurité à son avantage. De plus, la présence dans un tel module de moyens de communication évolués tels que USB 2.0 permet à ces tiers de multiplier les attaques par ces moyens de communication de très haut débit par rapport à d'autres moyens de communication (IS07816) beaucoup plus lents.

Dans la demande EP 1 486 907, un module de sécurité est également configurable en fonction de l'environnement. Le but est de procéder à une auto-configuration suivant les signaux reçus par le dispositif hôte. Ainsi, si un tiers malveillant imite un environnement particulier, le, module va s'adapter à cet environnement même s'il n'est pas autorisé.

### Brève description de l'invention

Le but de la présente invention est de proposer un module de sécurité capable de supporter les différentes fonctionnalités et configurations physiques de la connectique de la dernière génération et des générations antérieures, tout en offrant aucune nouvelle possibilité d'attaque due à cette adaptabilité.

Ce but est atteint par un module de sécurité comprenant des premiers moyens de communication (COM0) vers un dispositif hôte, des premiers moyens de stockage (MEM0) et des premiers moyens de décryption (ENC0), ainsi qu' un module d'état (ME) et des seconds moyens de communication (COM1), caractérisé en ce qu'il comprend des moyens de couplage/découplage électriques (TSB) desdits seconds moyens, ces moyens de couplage/découplage étant contrôlés par le module d'état (ME), et en ce qu'il comprend des moyens de réception d'un message sécurisé permettant de modifier l'état dudit module d'état (ME) et de contrôler l'activation et la désactivation des seconds moyens de communications (COM1).

Ainsi, selon l'état mémorisé dans la mémoire d'état du module, les seconds moyens de communications sont complètement inopérants et ne peuvent être utilisés par un tiers à des fins malhonnêtes. Le couplage/découplage électrique des moyens de communication sont commandés par des moyens matériels tels qu'éléments à trois-états (tri-state) ou "High Voltage bidirectional MOSFETs" selon le résultat d'une opération cryptographique.

Il en va de même pour les autres parties du module de sécurité telles qu'une portion de la mémoire. Cette mémoire peut contenir des informations telles que des clés ou numéros de série qui sont complètement désactivés donc impossible à accéder selon la mémoire d'état. Cette mémoire d'état envoie des signaux matériels de blocage ou déblocage de la mémoire afin que même si un programme pirate fonctionne dans un tel module, il ne puisse accéder à cette mémoire. Le même mécanisme peut s'appliquer à d'autres éléments tels qu'un moteur de décodage ou un module de décryption asymétrique.

Il existe plusieurs variantes de réalisation pour définir le mode d'opération du module de sécurité.

### A. Pré-configuration

Lors de la fabrication du module de sécurité, ou lors d'une étape de personnalisation dudit module, il est pré-configuré pour fonctionner selon un environnement particulier. Il va sans dire que cette pré-programmation pourra être modifiée durant une autre étape de pré-configuration dans un environnement d'initialisation.

### B. Activation par message

A l'initialisation, le module est dans un mode basique et seuls les moyens de communication communs à tous les dispositifs hôtes sont activés. Selon la pré-configuration, il pourra être dans un mode particulier compte tenu de la destination d'un tel module. Pour changer l'état du module de sécurité et donc activer d'autres fonctionnalités, le module attend la réception d'un message sécurisé lui autorisant un tel changement. Ce n'est qu'après avoir décrypté un tel message et après vérification de ce message que le module va changer d'état et donc ouvrir les seconds moyens de communications.

### Brève description des figures

L'invention sera mieux comprise grâce à la description détaillée qui va suivre et qui se réfère aux dessins annexés qui sont donnés à titre d'exemple nullement limitatif, à savoir:
- la figure 1 illustre un schéma global d'un module de sécurité,
- la figure 2 illustre le contrôle d'un port d'entrée/sortie.

### Description détaillée d'un mode de réalisation

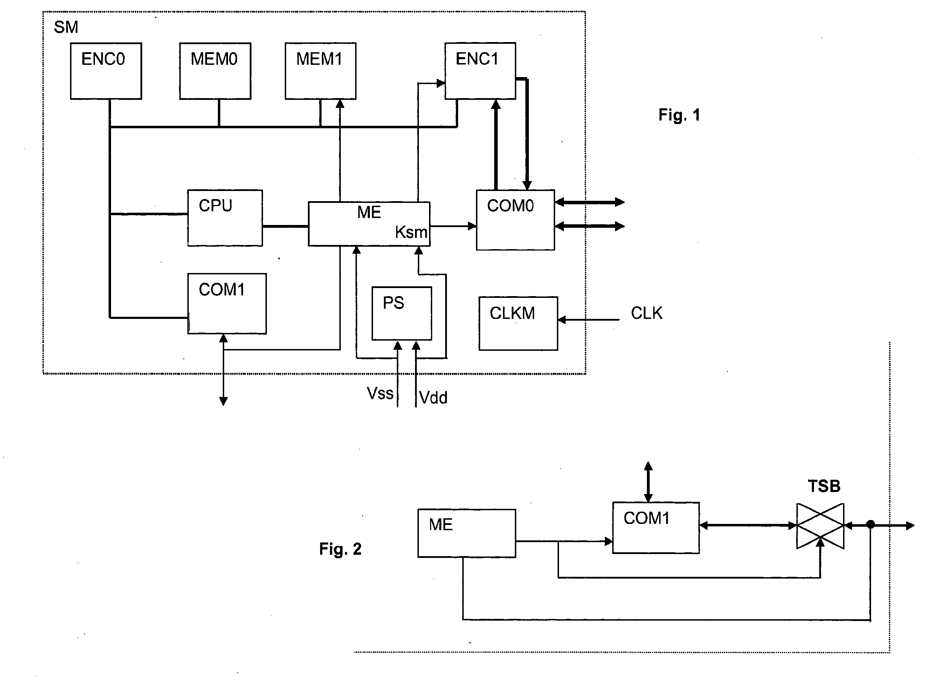

La figure 1 illustre un exemple d'un module de sécurité SM comprenant un mode de réalisation de l'invention. Selon cet exemple, ce module comprend des premiers moyens de communications COM0 et des seconds moyens de communication COM1. De même, la ressource mémoire disponible est divisée en plusieurs parties (ici 2) MEM0 et MEM1, pouvant être utilisée pour le programme du microprocesseur.

Selon notre exemple, le module dispose d'un premier module d'encryption/décryption ENC0 ainsi que d'un second module d'encryption/décryption ENC1.

Selon l'exemple illustré sur la figure 1, le module d'encryption/décryption est relié à un bus de communication haute-vitesse COM1. Une réalisation possible est le déchiffrage du flux audio/vidéo selon la norme DVB Common Descrambler ou un descrambleur propriétaire.

Les différents modules sont reliés au processeur CPU qui coordonne les opérations, initialise les modules, transmet les résultats d'un module à l'autre etc.

Un module particulier dit module d'état ME va contrôler l'activation et la désactivation de certains modules et plus généralement le fonctionnement du module de sécurité. Selon l'exemple particulier de la figure 1, ce module d'état ME contrôle les seconds moyens de communications COM1, les seconds moyens d'encryption/décryption ENC1 ainsi que la mémoire MEM1. Selon l'état de cette mémoire, des signaux sont transmis indépendamment du processeur pour activer ou désactiver les modules.

Cette activation est illustrée à la figure 2 dans laquelle le module d'état ME transmet une commande au module de communication COM1 et cette commande agit également sur les signaux émis ou reçus grâce à un élément de blocage tel qu'un circuit isolant TSB tel que Tri-State, "High Voltage bidirectional MOSFETs" ou tout autre élément isolant galvaniquement la connexion physique du module de sécurité. Cet élément permet d'isoler une voie de communication en la plaçant en mode haute impédance. Le module d'état va donc contrôler le couplage/découplage électrique de la communication COM1.

Lorsque le module de sécurité a désactivé le module de communication COM1, le module d'état ME continue à surveiller l'activité sur le port de communication COM1. Le module d'état ME pourra émettre un message d'alerte s'il continue de constater l'arrivée de parasites.

Il existe plusieurs manières pour influencer le module d'état ME. Comme indiqué dans le préambule de la demande, le module de sécurité détermine, en fonction des informations reçues de l'unité d'utilisateur, lequel des états correspond à cette unité.

Selon la variante mettant en oeuvre un message de sécurité, dès que ce message est reçu et vérifié par le module de sécurité, il provoque le changement de l'état du module d'état.

Selon cette variante, ce message est décrypté et vérifié par le processeur et le résultat et stocké dans le module d'état ME. II agit donc comme une mémoire avec des commandes partant en direction des différents modules concernés et d'un module de supervision afin de surveiller l'activité sur toutes les voies de communication.

Selon une autre variante, tout ou partie du message est traité directement par le module d'état ME. Le message peut être pré-traité par le processeur, par exemple par une clé propre au module de sécurité contenue dans la première mémoire MEM0, puis transmis au module d'état. Ce dernier dispose d'une clé propre Ksm qui va permettre de vérifier la commande contenue dans le message. Cette vérification peut être faite selon plusieurs manières connues, telles que l'utilisation d'une signature sur le message générée avec une clé asymétrique, l'autre clé asymétrique étant la clé Ksm du module de la mémoire d'état. Le microprocesseur ne peut pas accéder à la mémoire d'état sans connaître la clé propre du module d'état. Seul un message préparé par le centre de gestion pourra être accepté par le module d'état.

Si la vérification est correcte, le nouvel état est chargé dans le module d'état avec les conséquences attendues sur les autres modules.

Selon une variante de l'invention, le module d'état ME exécute des opérations de surveillance de l'état du module de sécurité. Il reçoit par exemple l'alimentation positive Vdd (généralement 5V) qui va également sur le module d'alimentation PS et observe des comportements à risques tels que des brusques changements de tension, tension anormalement basse ou haute. Selon les critères définis, il pourra sans réception d'un message modifier son état par exemple en générant un message d'erreur, ou en désactivant certaines fonctions dudit module. Les voies de communication (COM1, COM0) sont surveillées par le module d'état ME. Par voie de communication, on entend toutes les voies par lesquelles transitent les informations entrant ou sortant du module de sécurité telles que la voie I/O de la norme IS07816 ou les voies USB ou d'autres ports à haute vitesse y compris infrarouge etc. Les voies de liaison sont quant à elles les autres voies qui sont reliées avec le module hôte telles que l'alimentation (Vdd, Vss), l'horloge (CLK) ou le reset (RST).

De même, s'il constate que des parasites, bruits sont présents sur les moyens de communications tels que les premiers moyens de communication, il pourra également changer d'état ou initier des contre-mesures. De plus, le module d'état ME peut comprendre un profil de surveillance, d'une part spécifique à la voie de communication ou de liaison surveillée et d'autre part selon l'état du module d'état. Ainsi les paramètres de vérification du bon fonctionnement d'une voie de liaison pourront varier selon l'état du module d'état. On pourra tolérer des variations de tension de +/-10% dans un état alors que dans un autre état, seulement +/-5% seront tolérés. De même pour le nombre de parasites, microcoupures ou autres. Ces paramètres sont programmables et peuvent être modifiés grâce à la réception d'un message de sécurité.

Cette surveillance peut se faire même si la voie ou le moyen de communication est désactivé.

Le module d'état ME peut également contrôler les ressources internes du module de sécurité. La seconde mémoire MEM1 peut être désactivée, soit partiellement, soit complètement. De plus cette désactivation peut se faire soit par une commande électronique (blocage de la lecture et/ou de l'écriture) mais peut agir directement sur l'alimentation de ladite mémoire. Cette mémoire pourra être définie, selon l'état, comme à lecture seule, à écriture seule ou en lecture/écriture. Il en est de même pour les autres ressources du module de sécurité comme des modules d'encryption/décryption (ENC0, ENC1). Le module d'état (ME) peut contrôler des modules et/ou des fonctionnalités qui sont autorisés ou interdit selon l'état du module d'état. Ces fonctionnalités sont par exemple l'utilisation d'un bus interne à haut débit ou un mécanisme de régulation de l'horloge. Ces modules sont par exemple un générateur d'horloge, un module d'encryption/décryption, une mémoire, un régulateur de tension par pompe de charge etc.

Le message arrivant au module de sécurité provient de préférence d'un centre de gestion. Ce message peut arriver au module de sécurité SM soit par les premiers ou les seconds moyens de communication. Lors de l'initialisation sur site du module de sécurité et de son dispositif hôte, des messages sont transmis via le dispositif hôte pour le module de sécurité. Le centre de gestion connaît les caractéristiques de l'appareil hôte ainsi que les abonnements de l'abonné concerné et formate un message pour le module de sécurité contenant son état de fonctionnement. Ce message peut être propre à chaque module de sécurité, ou identique pour tous les modules de sécurité, un message contenant une version d'unité d'utilisateur et le niveau de sécurité du module de sécurité. Ainsi, s'il existe 8 différentes unités d'utilisateur, on trouvera dans le flux de transmission huit messages, chacun comprenant une version d'unité d'utilisateur et la configuration du module de sécurité correspondant.

Selon une autre variante, chaque dispositif hôte selon ses caractéristiques, stocke un message qui sera transmis ultérieurement au module de sécurité dès que celui-ci est connecté. L'état du module de sécurité sera donc en harmonie avec les spécifications du dispositif hôte.

Lorsque le module de sécurité SM a déterminé son état, il conserve cet état et est donc verrouillé. Pour que le module de sécurité accepte une nouvelle initialisation, le centre de gestion peut envoyer un message qui autorise une nouvelle procédure de configuration. Ce message peut être conditionnel c'est-à-dire qu'il peut comporter une indication de version de module de sécurité ou un état du module d'état comme condition de réinitialisation.

## Revendications

1. Module de sécurité comprenant des premiers moyens de communication (COM0) vers un dispositif hôte, des premiers moyens de stockage (MEM0) et des premiers moyens de décryption (ENC0), ainsi qu' un module d'état (ME) et des seconds moyens de communication (COM1), **caractérisé en ce qu'**il comprend des moyens de couplage/découplage électriques (TSB) desdits seconds moyens, ces moyens de couplage/découplage étant contrôlés par le module d'état (ME), et **en ce qu'**il comprend des moyens de réception d'un message sécurisé permettant de modifier l'état dudit module d'état (ME) et de contrôler l'activation et la désactivation des seconds moyens de communications (COM1).

2. Module de sécurité selon la revendication 1, **caractérisé en ce que** le module d'état (ME) comprend des moyens pour détecter l'activité sur les moyens de communication (COM0, COM1) et pour déterminer, selon cette activité, l'état dudit module d'état (ME).

3. Module de sécurité selon les revendications 1 ou 2, **caractérisé en ce que** les seconds moyens de communication (COM1) sont connectés au dispositif hôte par des contacts physiquement distincts des contacts des premiers moyens de communication (COM0).

4. Module de sécurité selon l'une des revendications 1 à 3, **caractérisé en ce que** les moyens de couplage/découplage électriques (TSB) comprennent des éléments conducteur/isolant du type "Tri-State" ou "High Voltage bidirectional MOSFETs".

5. Module de sécurité selon l'une des revendications 1 à 4, **caractérisé en ce que** les moyens de couplage/découplage électriques sont placés en série avec lesdits premiers moyens de communication (COM0) permettant d'isoler électriquement lesdits premiers moyens de communication (COM0).

6. Module de sécurité selon l'une des revendications 1 à 5, **caractérisé en ce que** les moyens de couplage/découplage électriques sont également placés en série avec au moins une des voies de liaison (RST, I/O, CLK) permettant d'isoler électriquement lesdits voies de liaison (RST, I/O, CLK).

7. Module de sécurité selon l'une des revendications 1 à 6, **caractérisé en ce qu'**il comprend des seconds moyens de stockage (MEM1), le module d'état (ME) comprenant des moyens d'activation/désactivation desdits seconds moyens de stockage.

8. Module de sécurité selon les revendications 1 à 7, **caractérisé en ce que** le module d'état (ME) comprend qu'il comprend des modules et/ou des fonctionnalités qui sont autorisés ou interdit selon l'état du module d'état (ME).

9. Module de sécurité selon la revendication 8, **caractérisé en ce que** l'état du module d'état (ME) comprend des moyens pour limiter le niveau d'accès aux seconds moyens de stockage (MEM1) soit en lecture seule, en écriture seule, soit en lecture/écriture.

10. Module de sécurité selon l'une des revendications 1 à 9, **caractérisé en ce qu'**il comprend des seconds moyens de décryption (ENC1), ces seconds moyens de décryption étant activé/désactivé par le module d'état (ME).

11. Module de sécurité selon la revendication 10, **caractérisé en ce que** les seconds moyens de décryption sont alimentés en énergie sous contrôle du module d'état (ME).

12. Module de sécurité selon l'une des revendications précédentes, **caractérisé en ce que** le module d'état (SM) comprend des moyens de surveillance des paramètres de fonctionnement courant de toutes les voies de liaison du module de sécurité et des moyens permettant de changer l'état du module d'état (ME) selon le résultat de la surveillance.

13. Module de sécurité selon la revendication 12, **caractérisé en ce que** les moyens de surveillance sont connectés également sur le ou les voies de liaison (RST, Vdd, Vss, CLK) dudit module.

14. Module de sécurité selon l'une des revendications 12 ou 13, **caractérisé en ce que** les moyens de surveillance comprennent un profil de surveillance des voies de communication qui peut être propre à chaque état du module d'état.

## Patentansprüche

1. Sicherheitsmodul mit ersten Kommunikationsmitteln (COM0) zu einer Host-Vorrichtung hin, ersten Speichermitteln (MEM0) und ersten Entschlüsselungsmitteln (ENC0) sowie einem Zustandsmodul (ME) und zweiten Kommunikationsmitteln (COM1), **gekennzeichnet dadurch, dass** es elektrische Koppler/Auskopplungsmittel (TSB) für die genannten zweiten Mittel umfasst, wobei die Koppler/Auskopplungsmittel vom Zustandsmodul (ME) kontrolliert werden, und dadurch, dass es Mittel zum Empfang einer gesicherten Nachricht umfasst, wodurch es möglich wird, den Zustand des genannten Zustandsmoduls (ME) zu verändern und die Aktivierung und Deaktivierung der zweiten Kommunikationsmittel (COM1) zu kontrollieren.

2. Sicherheitsmodul nach Anspruch 1, **gekennzeichnet dadurch, dass** das Zustandsmodul (ME) Mittel umfasst, um die Aktivität auf den Kommunikationsmitteln (COM0, COM1) zu erkennen und um, je nach dieser Aktivität, den Zustand des genannten Zustandsmoduls (ME) zu bestimmen.

3. Sicherheitsmodul nach den Ansprüchen 1 oder 2, **gekennzeichnet dadurch, dass** die zweiten Kommunikationsmittel (COM1) mit der Host-Vorrichtung durch Kontakte verbunden sind, die physisch verschieden von den Kontakten der ersten Kommunikationsmittel (COM0) sind.

4. Sicherheitsmodul nach einem der Ansprüche 1 bis 3, **gekennzeichnet dadurch, dass** die elektrischen Koppler/Auskopplungsmittel (TSB) Leiter/Isolator-Elemente vom Typ "Tri-State" oder "High Voltage bidirectional MOSFETs" umfassen.

5. Sicherheitsmodul nach einem der Ansprüche 1 bis 4, **gekennzeichnet dadurch, dass** die elektrischen Koppler/Auskopplungsmittel in Reihe mit den ersten Kommunikationsmitteln (COM0) geschaltet werden, wodurch es möglich wird, die ersten Kommunikationsmittel (COM0) elektrisch zu isolieren.

6. Sicherheitsmodul nach einem der Ansprüche 1 bis 5, **gekennzeichnet dadurch, dass** die elektrischen Koppler/Auskopplungsmittel ebenfalls in Reihe mit mindestens einem der Verbindungswege (RST, I/O, CLK) geschaltet werden, wodurch es möglich wird, besagte Verbindungswege (RST, I/O, CLK) elektrisch zu isolieren.

7. Sicherheitsmodul nach einem der Ansprüche 1 bis 6, **gekennzeichnet dadurch, dass** es zweite Speichermittel (MEM1) umfasst, wobei das Zustandsmodul (ME) Mittel zur Aktivierung/Deaktivierung der genannten zweiten Speichermittel umfasst.

8. Sicherheitsmodul nach den Ansprüchen 1 bis 7, **gekennzeichnet dadurch, dass** das Zustandsmodul (ME) Module und/oder Funktionen umfasst, die je nach dem Zustand des Zustandsmoduls (ME) berechtigt oder verboten sind.

9. Sicherheitsmodul nach Anspruch 8, **gekennzeichnet dadurch, dass** der Zustand des Zustandsmoduls (ME) Mittel umfasst, um das Zugangsniveau zu den zweiten Speichermitteln (MEM1) zu begrenzen, entweder nur zum Lesen, nur zum Schreiben, oder zum Lesen und Schreiben.

10. Sicherheitsmodul nach einem der Ansprüche 1 bis 9, **gekennzeichnet dadurch, dass** es zweite Entschlüsselungsmittel (ENC1) umfasst, die durch das Zustandsmodul (ME) aktiviert/deaktiviert werden.

11. Sicherheitsmodul nach Anspruch 10, **gekennzeichnet dadurch, dass** die zweiten Entschlüsselungsmittel unter Kontrolle des Zustandsmoduls (ME) mit Energie versorgt werden.

12. Sicherheitsmodul nach einem der vorhergehenden Ansprüche, **gekennzeichnet dadurch, dass** das Zustandsmodul (SM) Überwachungsmittel für die laufenden Betriebsparameter aller Verbindungswege des Sicherheitsmoduls umfasst sowie Mittel, durch die es möglich wird, den Zustand des Zustandsmoduls (ME) je nach dem Ergebnis der Überwachung zu ändern.

13. Sicherheitsmodul nach Anspruch 12, **gekennzeichnet dadurch, dass** die Überwachungsmittel ebenfalls mit dem oder den Verbindungsweg(en) (RST, Vdd, Vss, CLK) des genannten Moduls verbunden sind.

14. Sicherheitsmodul nach einem der Ansprüche 12 oder 13, **gekennzeichnet dadurch, dass** die Überwachungsmittel ein Überwachungsprofil der Kommunikationswege umfassen, das jedem Zustand des Zustandsmoduls zueigen sein kann.

## Claims

1. Security module comprising first communication means (COM0) to a host device, first storage means (MEM0) and first decryption means (ENC0), as well as a state module (ME) and second communication means (COM1), **characterized in that** it includes electric connection/disconnection means (TSB) of said second means, said connection/disconnection means being controlled by the state module (ME), and **in that** it includes reception means of a secured message allowing the modification of the state of said state module (SM) and the control of the activation and deactivation if the second communications means (COM1).

2. Security module according to claim 1, **characterized in that** the state module (ME) includes means to detect the activity on the communication means (COM0, COM1) and to determine, according to this activity, the state of said state module (ME).

3. Security module according to claims 1 or 2, **characterized in that** the second communication means (COM1) are connected to the host device by physically different contacts to the ones of first communication means (COM0).

4. Security module according to one of claims 1 to 3, **characterized in that** the electric connection/disconnection means (TSB) comprise conductor/insulating elements of the "Tri-State" or "High Voltage bidirectional MOSFETs" kind.

5. Security module according to one of claims 1 to 4, **characterized in that** the electric connection/disconnection means are placed in series with said first communication means (COM0) allowing to electrically insulate said first communication means (COM0).

6. Security module according to one of claims 1 to 5, **characterized in that** the electric connection/disconnection means are also placed in series with at least one connection path (RST, I/O, CLK) allowing to electrically insulate said connection path (RST, I/O, CLK).

7. Security module according to one of claims 1 to 6, **characterized in that** it comprises second storage means (MEM1), the state module (SM) comprising activation/deactivation means of said second storage means.

8. Security module according to claims 1 to 7, **characterized in that** the state module (SM) comprises modules and/or functions that are authorized or forbidden according to the state of the state module (SM).

9. Security module according to claim 8, **characterized in that** the state of the state module (ME) includes means to limit the access level to the second storage means (MEM1) in read only, in writing only, or in reading/writing mode.

10. Security module according to one of claims 1 to 9, **characterized in that** it includes second decryption means (ENC1), these second decryption means being activated/deactivated by the state module (ME).

11. Security module according to claim 10, **characterized in that** the second decryption means are power supplied under control of the state module (ME).

12. Security module according to one of previous claims, **characterized in that** the state module (ME) includes supervision means of the current working parameters of all the connection paths of the security module and of means allowing the state of the state module (SM) to be changed according to the result of the supervision.

13. Security module according to claim 12, **characterized in that** the supervision means are also connected to the connection paths (RST, Vdd, Vss, CLK) of said module.

14. Security module according to one of claims 12 or 13, **characterized in that** the supervision means comprise a supervision profile of the communication paths that can be specific to each state of the state module.
